# EUROPEAN PATENT APPLICATION

(11) **EP 4 216 602 A1**
(43) Date of publication of application: **26.07.2023**
(21) Application number: 20953709.1
(22) Date of filing: 18.09.2020
(51) Int. Cl.: H04W 28/16, H04W 56/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Novagraaf Technologies
(86) International application number: PCT/CN2020/116241
(87) International publication number: WO 2022/056851

(57) **Abstract**

A wireless communication method, a terminal device, and a network device. The method comprises: a terminal device receives a first message sent by a first network device, the first message being used for determining a change in quality of service (QoS) related information; the terminal device determines, according to first condition information, a condition for changing the QoS related information.

## Description

### TECHNICAL FIELD

The embodiments of the present application relate to the communication field, and in particular to a wireless communication method, a terminal device, and a network device.

### BACKGROUND

In some scenarios, the quality of service (QoS) parameter may change. In order to make the application of the terminal device adapt to the change of the QoS parameter, it is necessary to notify the terminal device or the application server through the network device. However, due to the uncertainty of the signaling transmission delay, the time for the terminal device and the application server to receive the adjustment signaling from the network device may be different, and it is possible that the parameters of the application layer of the terminal device cannot be adjusted in time when the terminal device adjusts the QoS parameters immediately after receiving the instruction, which affects the communication quality of the service. Therefore, how to change the QoS parameters without affecting the service quality is an urgent problem to be solved.

### SUMMARY

Embodiments of the present application provide a wireless communication method, terminal device, and network device, which are beneficial to ensure that the communication quality of services is not affected when QoS parameters are changed.

In a first aspect, a method for wireless communication is provided, including: receiving, by a terminal device, a first message sent by a first network device, wherein the first message is used to determine a change of quality of service (QoS) related information; and determining, by the terminal device according to the first condition information, a condition for changing the QoS related information.

In a second aspect, a wireless communication method is provided, including: sending, by a first network device, first condition information to a terminal device, wherein the first condition information is used by the terminal device to determine a condition for changing quality of service (QoS) related information.

In a third aspect, a wireless communication method is provided, including: receiving, by a second network device, a second message sent by a first network device, wherein the second message is used to determine a change in QoS related information; and determining, by the second network device according to the second message, a condition for changing the QoS related information.

In a fourth aspect, a terminal device is provided, configured to execute the method in the foregoing first aspect or any possible implementation manner of the first aspect. Specifically, the terminal device includes a unit configured to execute the method in the foregoing first aspect or any possible implementation manner of the first aspect.

In a fifth aspect, a network device is provided, configured to execute the method in the second aspect to the third aspect or any possible implementation manner. Specifically, the network device includes a unit configured to execute the method in the second aspect to the third aspect or any possible implementation manner.

In a sixth aspect, a terminal device is provided, and the terminal device includes: a processor and a memory. The memory is used to store a computer program, and the processor is used to invoke and run the computer program stored in the memory to execute the method in the above first aspect or implementations thereof.

In a seventh aspect, a network device is provided, and the network device includes: a processor and a memory. The memory is used to store a computer program, and the processor is used to invoke and run the computer program stored in the memory to execute the methods in the second to third aspects or implementations thereof.

In an eighth aspect, a chip is provided for implementing the method of any one of the above first to third aspects or each implementation manner thereof.

Specifically, the chip includes: a processor, configured to invoke and run a computer program from the memory, so that the device installed with the chip executes the method of any one of the above-mentioned first to third aspects or any of the implementations thereof.

In a ninth aspect, there is provided a computer-readable storage medium for storing a computer program, and the computer program causes a computer to execute the method of any one of the above-mentioned first to third aspects or each implementation manner thereof.

In a tenth aspect, a computer program product is provided, including computer program instructions, the computer program instructions cause a computer to execute the method of any one of the above first to third aspects or each implementation manner thereof.

In an eleventh aspect, a computer program is provided, which, when running on a computer, causes the computer to execute the method of any one of the above first to third aspects or each implementation manner thereof.

Based on the above technical solution, when the QoS related information needs to be changed, the terminal device changes the QoS related information according to the first condition information, instead of immediately changing it, which can ensure that there is enough time for adjusting the application layer parameter or application layer behavior. Therefore, it is beneficial to avoid the problem that the QoS related information is changed immediately while the application layer parameter or application layer behavior are not adjusted in time, which affects the quality of service communication.

### BRIEF DESCRIPTION OF THE DRAWINGS

FIG. 1 is a schematic diagram of an application scenario provided by an embodiment of the present application.
FIG. 2 is a schematic diagram of a work breakdown structure based on the AI/ML model.
FIG. 3 is a schematic diagram of uplink and downlink communication based on the QoS mechanism.
FIG. 4 is a schematic diagram of a wireless communication method provided by an embodiment of the present application.
FIG. 5 is a schematic block diagram of a terminal device provided by an embodiment of the present application.
FIG. 6 is a schematic block diagram of a network device provided by an embodiment of the present application.
FIG. 7 is a schematic block diagram of a network device provided by an embodiment of the present application.
FIG. 8 is a schematic block diagram of a communication device provided by another embodiment of the present application.
FIG. 9 is a schematic block diagram of a chip provided by an embodiment of the present application.
FIG. 10 is a schematic block diagram of a communication system provided by an embodiment of the present application.

### DETAILED DESCRIPTION

Hereinafter, the technical solutions in the embodiments of the present application will be described with reference to the drawings in the embodiments of the present application. Obviously, the described embodiments are part of the embodiments of the present application, but not all of the embodiments. With regard to the embodiments in this application, all other embodiments obtained by persons of ordinary skill in the art without making creative efforts belong to the scope of protection of this application.

The technical solutions of the embodiments of the present application can be applied to various communication systems, such as: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system , New Radio (NR) system, evolution system of NR system, LTE-based access to unlicensed spectrum (LTE-U) system, NR-based access to unlicensed spectrum (NR-U) system, Non-Terrestrial Networks (NTN) system, Universal Mobile Telecommunications System (UMTS), Wireless Local Area Networks (WLAN), Wireless Fidelity (WiFi), fifth-generation communication (5th-Generation, 5G) system or other communication systems, etc.

Generally speaking, the number of connections supported by traditional communication systems is limited and easy to implement. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc., the embodiments of the present application may also be applied to these communication systems.

Optionally, the communication system in this embodiment of the application can be applied to a carrier aggregation (CA) scenario, a dual connectivity (DC) scenario, or a standalone (SA) networking scene.

Optionally, the communication system in the embodiment of the present application may be applied to an unlicensed spectrum, wherein the unlicensed spectrum may also be considered as a shared spectrum; or, the communication system in the embodiment of the present application may also be applied to a licensed spectrum, wherein, the licensed spectrum can also be considered as non-shared spectrum.

The embodiments of the present application describe various embodiments in conjunction with network device and terminal device, wherein the terminal device may also be referred to as user equipment (UE), access terminal, user unit, user station, mobile station, mobile site, remote station, remote terminal, mobile device, user terminal, terminal, wireless communication device, user agent or user device, etc.

A terminal device can be a station (STATION, ST) in a WLAN, a cellular phone, a cordless phone, a Session Initiation Protocol (SIP) phone, a Wireless Local Loop (WLL) station, a personal digital assistant (PDA) devices, handheld devices with wireless communication functions, computing devices or other processing devices connected to wireless modems, vehicle-mounted devices, wearable devices, terminal device in the next-generation communication systems such as NR networks, or terminal device in future evolved public land mobile network (PLMN) network, etc.

In the embodiment of this application, terminal devices can be deployed on land, including indoor or outdoor, handheld, wearable or vehicle-mounted; they can also be deployed on water (such as ships, etc.); they can also be deployed in the air (such as aircraft, balloons and satellites, etc.).

In this embodiment of the application, the terminal device may be a mobile phone (Mobile Phone), a tablet computer (Pad), a computer with a wireless transceiver function, a virtual reality (VR) terminal device, an augmented reality (AR) terminal device, wireless terminal devices in industrial control, wireless terminal devices in self driving, wireless terminal devices in remote medical, wireless terminal devices in smart grid, wireless terminal device in transportation safety, wireless terminal device in smart city, or wireless terminal device in smart home.

As an example but not a limitation, in this embodiment of the present application, the terminal device may also be a wearable device. Wearable devices can also be called wearable smart devices, which is a general term for the application of wearable technology to intelligently design daily wear and develop wearable devices, such as glasses, gloves, watches, clothing and shoes. A wearable device is a portable device that is worn directly on the body or integrated into the user's clothing or accessories. Wearable devices are not only a hardware device, but also achieve powerful functions through software support, data interaction, and cloud interaction. Generalized wearable smart devices include those of full-featured, large-sized, complete or partial functions without relying on smart phones, such as smart watches or smart glasses, etc., and those only focus on a certain type of application functions, and need to cooperate with other devices such as smart phones, such as various smart bracelets and smart jewelry for physical sign monitoring.

In the embodiment of this application, the network device may be a device used to communicate with mobile devices, and the network device may be an access point (AP) in WLAN, a base transceiver station (BTS) in GSM or CDMA, or a base station (NodeB, NB) in WCDMA, or an evolved base station (Evolutional Node B, eNB or eNodeB) in LTE, or a relay station or an access point, or a vehicle-mounted device, a wearable device, and a network device (gNB) in an NR network, or the network device in the future evolution of the PLMN network or the network device in the NTN network, etc.

As an example but not a limitation, in this embodiment of the present application, the network device may have a mobile feature, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station installed on land, water, and other locations.

In this embodiment of the application, the network device may provide services for a cell, and the terminal device communicates with the network device through the transmission resources (for example, frequency domain resources, or spectrum resources) used by the cell. The cell may be a cell corresponding to a network device (e.g., a base station), the cell may belong to a macro base station, or a base station corresponding to a small cell, wherein the small cell may include: Metro cell, Micro cell, Pico cell, Femto cell, etc. These small cells have the characteristics of small coverage and low transmission power, and are suitable for providing high-speed data transmission services.

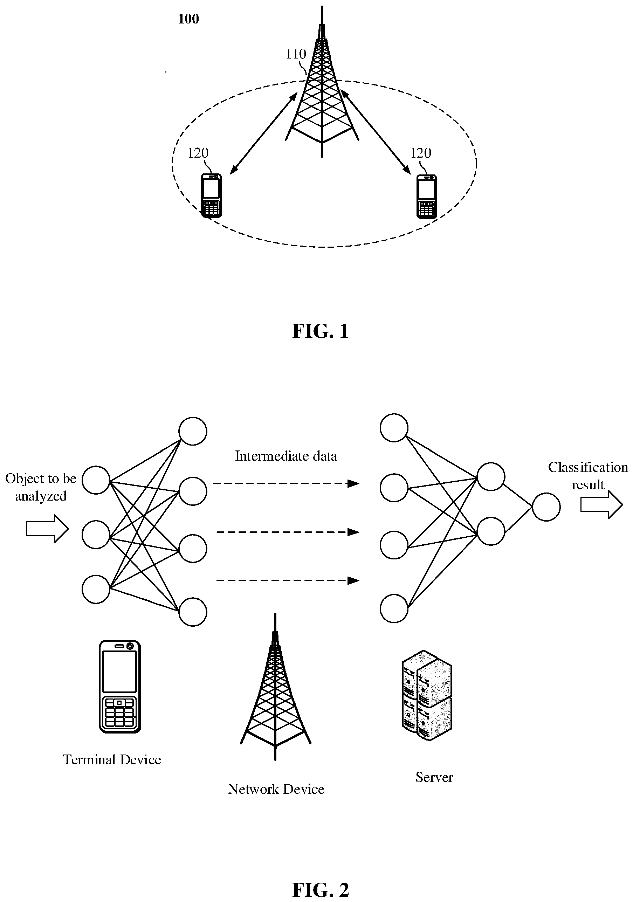

Exemplarily, a communication system 100 applied in this embodiment of the application is shown in FIG. 1. The communication system 100 may include a network device 110, and the network device 110 may be a device for communicating with a terminal device 120 (or referred to as a communication terminal, terminal). The network device 110 can provide communication coverage for a specific geographical area, and can communicate with terminal devices located in the coverage area.

FIG. 1 exemplarily shows a network device and two terminal devices. Optionally, the communication system 100 may include multiple network devices, and the coverage of each network device may include other numbers of terminal devices, which is not limited in this embodiment of the present application.

Optionally, the communication system 100 may further include other network entities such as a network controller and a mobility management entity, which is not limited in this embodiment of the present application.

It should be understood that a device with a communication function in the network/system in the embodiment of the present application may be referred to as a communication device. Taking the communication system 100 shown in FIG. 1 as an example, the communication device may include network device 110 and terminal device 120 with communication functions, and the network device 110 and terminal device 120 may be the specific device described above, which will not be repeated here. The communication device may also include other devices in the communication system 100, such as network controllers, mobility management entities and other network entities, which are not limited in this embodiment of the present application.

It should be understood that the terms "system" and "network" are often used interchangeably herein. The term "and/or" in this article is just an association relationship describing associated objects, which means that there can be three relationships, for example, A and/or B can mean: A exists alone, A and B exist simultaneously, and B exists alone. In addition, the character "/" in this article generally indicates that the contextual objects are an "or" relationship.

It should be understood that the "indication" mentioned in the embodiments of the present application may be a direct indication, may also be an indirect indication, and may also mean that there is an association relationship. For example, A indicates B, which can mean that A directly indicates B, for example, B can be obtained through A; it can also indicate that A indirectly indicates B, for example, A indicates C, and B can be obtained through C; and it can also indicate that there is an association relation between A and B.

In the description of the embodiments of the present application, the term "corresponding" may indicate that there is a direct or indirect correspondence between the two, or that there is an association between the two, or they are in the relation of indicating and being indicated, configuring and being configured, and the like.

In some scenarios, in order to improve the effect of big data analysis and user experience, multi-level artificial intelligence (AI) or machine learning (Machine Learning, ML) can be used, that is, big data analysis is realized by work breakdown of the network elements on the network side and the terminal devices.

FIG. 2 is a schematic diagram of a work breakdown structure. The terminal device performs partial operations on the data to form intermediate data, and then sends the intermediate data to the server (such as an edge server) through the mobile network, and the server performs further processing calculation on the intermediate data. Such division of labor helps share the workload of data calculation between the terminal and the server, and protects the privacy of the terminal user.

When the number of layers of the model is large, which layer to split (called the split point) will result in different computing resource consumption, computing time consumption, transmission rate, transmission delay, etc., between the terminal and the server.

For example, for a virtual geographic group network (VGG)-16 model, taking the refresh rate of 30 frames per second as an example, different split point positions will result in different the amount of data (data size) output on the terminal device side and different required uplink transmission rate to the server.

| split point position | Approximate output data size (M Byte) | Required uplink data rate (Mbps) |
|---|---|---|
| Candidate split point 0 (e.g., Cloud -based inference) | 0.6 | 145 |
| Candidate split point 1 (e.g., after pool layer 1) | 3 | 720 |
| Candidate split point 2 (e.g. after pool layer 2) | 1.5 | 360 |
| Candidate split point 3 (e.g. after pool layer 3) | 0.8 | 192 |
| Candidate split point 4 (e.g. after pool layer 4) | 0.5 | 120 |
| Candidate split point 5 (e.g. after pool layer 5) | 0.1 | 24 |
| Candidate split point6 (e.g., Device-based inference) | N/A | N/A |

It should be understood that the split point positions shown in the table are only examples, and in other scenarios, other split point positions may also be used, which is not limited in the present application.

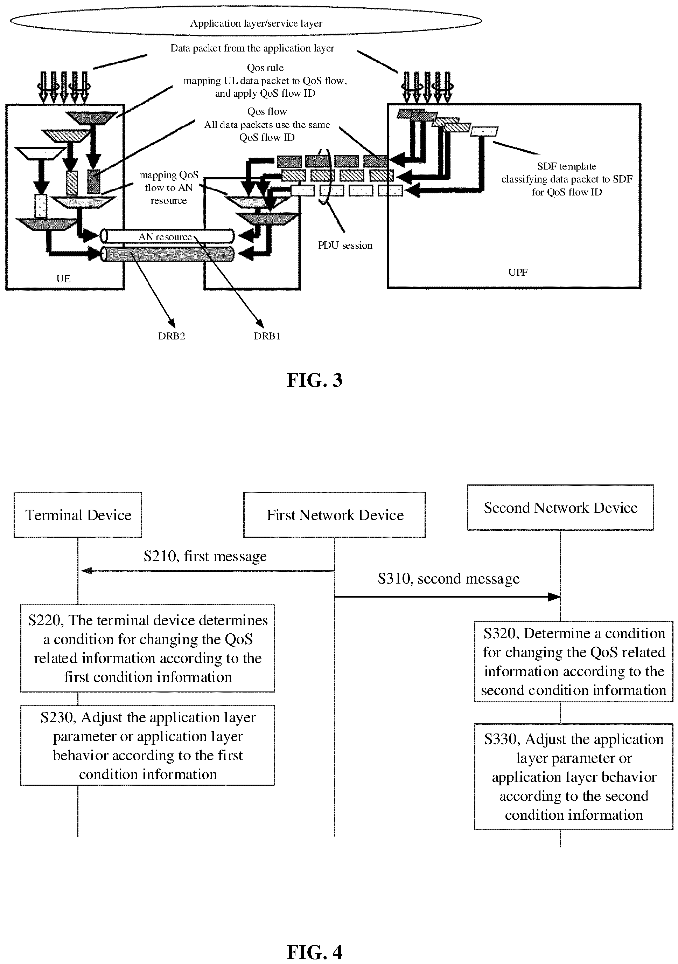

In order to ensure the transmission rate, the 5GS QoS mechanism is introduced, as shown in FIG. 3, in order to be able to transmit user plane data, one or more Quality of Service flow (QoS Flow) (or data flow) needs to be established , and different data flows correspond to different QoS parameters. As an important measure of communication quality, QoS parameters are usually used to indicate the characteristics of QoS Flow.

QoS parameters may include but are not limited to: 5G QoS indicator (5QI), allocation and retention priority (ARP), guaranteed flow bit rate (GFBR), maximum flow bit rate (MFBR), maximum packet loss rate (uplink/downlink), end-to-end PDB, AN-PDB, packet error rate (PER), priority level, averaging window, resource type, maximum data burst volume, UE-aggregate maximum bit rate (AMBR), session-aggregate maximum bit rate (Session-AMBR), etc.

The filter, or referred to as service data flow (SDF) template, contains characteristic parameters describing data packets, and is used to filter out specific data packets to be bound to a specific QoS flow. Optionally, the filter is an IP quintuple, that is, source and target IP addresses, source and target port numbers, and protocol type.

The user plane network element on the network side and terminal device can form a filter according to the combination of characteristic parameters of the data packet, which is used to filter the uplink or downlink data packet transmitted on the user plane that meets the characteristics of the data packet, and bind it to a certain data flow.

The specific communication approach is described in conjunction with the FIG. 3. In the downlink direction, the non-access stratum (NAS) SDF template of the core network classifies and maps different data packets from the application layer to different QoS flows in different PDU sessions, and send it to RAN in different protocol data unit (PDU) sessions. The RAN maps it to different data radio bearers (DRB) according to the ID information of the QoS flow to be transmitted to the UE on the air interface. Similarly, for uplink data, a similar operation can also be used.

In some scenarios, QoS parameters may change. In order to enable the application of the terminal device to adapt to the change of QoS parameters, it is necessary to notify the terminal device and/or application server through the network device. However, due to the uncertainty of signaling transmission delay, the time for the terminal device and the application server to receive the adjustment signaling of the network device may be different, and the QoS parameters need to be adjusted once the signaling is received, which may cause the application layer parameters of the terminal device to not be adjusted quickly. This means that before the application layer parameters are adjusted, there may be a mismatch in the transmission rate, which affects the end-to-end delay of service processing. Therefore, how to change QoS parameters without affecting service transmission is an urgent problem to be solved.

FIG. 4 is a schematic interaction diagram of a wireless communication method provided by an embodiment of the present application. As shown in FIG. 4, the method may include at least part of the following:

### Embodiment one:

S210. The terminal device receives a first message sent by the first network device, wherein the first message is used to determine a change in quality of service QoS related information;
S220. The terminal device determines a condition for changing the QoS related information according to the first condition information.

Further, when the condition is satisfied, the QoS related information is changed, that is, in the embodiment of the present application, the terminal device can change the QoS related information according to the first condition information instead of changing the QoS related information immediately, and can ensure sufficient time for adjustment of application layer parameter or behavior. Therefore, it is helpful to avoid the problem that QoS related information is changed immediately but application layer parameter or behavior are not adjusted in time to affect the quality of service communication.

It should be understood that the embodiment of the present application may be applicable to any communication system described in the embodiment in FIG. 1.

It should also be understood that the embodiments of the present application may be applicable to, but not limited to, services that are sensitive to changes in QoS parameters. For example, services sensitive to QoS parameters such as transmission delay, throughput, and packet loss rate, such as augmented reality (AR) services, virtual reality (VR) services, video call services, etc.

It should be noted that the embodiment of the present application is applicable to the scenario where QoS related information is changed according to specific conditions, and further, the application layer behavior can also be adjusted according to the change of QoS related information, and it can also be applied to the scenario where other network states are changed according to specific conditions, and further, application layer behavior may be adjusted according to other network status changes, which is not limited in this application. For example, other network states such as tariffs, user balances, network congestion/load conditions, etc., the terminal base station or the application server can determine the change conditions according to the condition information sent by the network side.

Optionally, in this embodiment of the application, the QoS related information may include, but not limited to, at least one of the following: the quality of service QoS parameters of data flows, the QoS parameters of radio bearers, the binding relationships of data flows, the binding relationship of the radio bearer, and the configuration parameters of the radio bearer.

Optionally, the binding relationship of the data flow may include, but not limited to, for example the binding relationship between a data flow and a filter.

Optionally, the binding relationship of the radio bearer may include, but not limited to, for example the binding relationship between a radio bearer and a data flow.

Optionally, the radio bearer configuration parameters may include, for example, radio bearer security parameters, resource configuration parameters, retransmission parameters, etc., and the present application is not limited thereto.

Optionally, in this embodiment of the application, the change of the QoS related information may include, but not limited to, at least one of the following: the establishment of the QoS related information, the update of the QoS related information, the delete of the above-mentioned QoS related information.

In some scenarios, the first network device determines that QoS related information needs to be changed, for example, a base station handover occurs, network congestion occurs (such as a sudden increase in the number of users), or a terminal device moves into or out of a specific range, such as the serving range of an edge server, etc. In some other scenarios, the first network device may also determine that the QoS related information needs to be changed based on the request of the terminal device, and this application does not specifically limit the triggering manner of changing the QoS related information.

When the QoS parameter needs to be changed, the first network device can modify the data flow (for example, modify the QoS parameter or filter corresponding to the data flow), and then take effect at a specified time (or under other conditions). For another example, it can create a data flow corresponding to a new QoS parameter, and then bind the filter of the data flow corresponding to the original QoS parameter to the new data flow at a specified time. For another example, the parameters of the current data radio bearer (DRB) is modified, which may take effect at a specified time. For another example, on the air interface, establish a new DRB, and then bind the data flow on the original DRB to the new DRB for transmission at the specified time. In other implementations, the first network device may not make modifications, but notify the terminal device that the above modifications need to be performed, and the terminal device further performs the above modifications at a specific time (or under specific conditions). The implementation manner of changing the QoS related information is not limited.

The first network device sends a first message to the terminal device, wherein the first message is used to determine a change of QoS related information. Optionally, the change of the QoS related information may include, but not limited to, for example: the QoS related information has been changed but has not taken effect, and the QoS related information has not changed and needs to be changed.

That is, the first message may be used to notify the terminal device of the changed QoS related information, or may also request (or in other words, notify) the terminal device to change the QoS related information.

As example 1, the first message is used to notify the terminal device of the changed QoS parameter of the data flow or the QoS parameter of the bearer, and /or of the changed binding relationship of the data flow or the bearer.

In this case, the first condition information is used to determine a valid condition of the changed QoS parameter of the data flow or bearer and/or a valid condition of the changed binding relationship of the data flow or bearer.

As example 2, the first message is used to request the terminal device to change a QoS parameter of a data flow or a bearer, and/or to change a binding relationship of a data flow or a bearer.

In this case, the first condition information is used to determine the execution condition for changing the QoS parameter of the data flow or the bearer and/or the execution condition for changing the binding relationship of the data flow or the bearer.

In this example 1, the first message includes at least one of the following:
The changed Quality of Service (QoS) parameter of the data flow;
The changed QoS parameter of the bearer;
The changed binding relationship of the data flow;
The changed binding relationship of the bearer.

That is, the first network device may notify the terminal device which data flows or bearers have QoS parameters changed, or which data flows or bearers have binding relationships changed, through the first message. It should be understood that at this point, the changed QoS parameter or binding relationship has not yet taken effect, that is, services on the terminal device side have not been affected by the adjustment of the QoS parameter and binding relationship.

In this example 2, the first message includes at least one of the following:
The Quality of Service (QoS) parameter of data flows that needs to be changed;
The QoS parameter of the bearer that needs to be changed;
The binding relationship of the data flow that needs to be changed;
The binding relationship of the bearer that needs to be changed.

That is, which data flows or bearer QoS parameters need to be changed, or which data flows or bearer binding relationships need to be changed. It should be understood that at this point, the QoS parameters or binding relationship have not been changed.

Further, the terminal device may change QoS related information according to the first condition information, for example, change QoS parameters, or change the aforementioned binding relationship.

For example, for Example 1, the terminal device may determine the effective condition of the changed QoS parameter and/or binding relationship according to the first condition information, such as effective time and effective location.

For another example, for example 2, the terminal device may determine the execution conditions for changing the QoS parameter and/or binding relationship according to the first condition information, such as execution time, execution location, and the like.

That is, the first condition information may be used to determine the effective condition of the changed QoS parameter and/or the binding relationship and/or the execution condition of changing the QoS parameter and/or the binding relationship.

For the scenario in the aforementioned Example 1, the first condition information may include, but not limited to, for example at least one of the following:
The effective time of the changed QoS parameter;
The effective location of the changed QoS parameter;
The effective time of the changed binding relationship between the data flow and the filter;
The effective location of the changed binding relationship between the data flow and the filter;
The effective time of the changed binding relationship between the radio bearer and the data flow;
The effective location of the changed binding relationship between the radio bearer and the data flow;
The effective time of the changed configuration parameter of the radio bearer;
The effective location of the changed configuration parameter of the radio bearer.

For the scenario in the aforementioned example 2, the first condition information may include but not limited to at least one of the following:
the time information for changing the QoS parameter;
the location information for changing the QoS parameter;
the time information for changing the binding relationship between the data flow and the filter;
the location information for changing the binding relationship between the data flow and the filter;
the time information for changing the binding relationship between the radio bearer and the data flow;
the location information for changing the binding relationship between the radio bearer and the data flow;
the time information for changing the configuration parameter of the radio bearer;
the location information for changing the configuration parameter of the radio bearer.

It should be noted that, in the embodiment of the present application, each time information in the first condition information may be the same, or may also be different, for example, the time information for changing the QoS parameter and the time information for changing the binding relationship of the data flow and filter may be the same, or the latter may lag behind the former. The location information in the first condition information may be the same or different, which is not limited in this application.

It should be understood that the time information or effective time included in the first condition information may be an absolute time, that is, a specific time point or a time period, or it may be a relative time, such as a time offset relative to a certain time point, which is not limited in this application.

Hereinafter, the specific indication method of the time information will be described in detail, and it should be understood that it may be applicable to any time information or effective time in the first condition information.

As an example, the time information is used to indicate a specific time point or time period.

As another example, the time information may be used to indicate a first time offset and/or first time information, the first time offset may be a time offset relative to the first time information, and the first time offset may be a time offset relative to the first time information. The time information may be, for example, the time when the first network device sends the first message, or may also be the time when the terminal device receives the first message, or may be other reference time points, which are not limited in this application.

Further, the terminal device may determine the target time according to the first time information and the first time offset, and further determine the target time as the effective time of the aforementioned QoS related information, or the time for executing the modification of the QoS related information.

Optionally, in this embodiment of the present application, the location information in the first condition information may be a specific location or a specific area, for example, a certain cell, or a tracking area (TA).

Optionally, in some embodiments, the first network device may be an access network device, such as a base station.

In this case, the first message may be any downlink message or signaling used for communication between the access network device and the terminal device, for example, the first message may be a radio resource control (RRC) message, as a specific example, the first message may be an RRC connection reconfiguration message.

Optionally, in some other embodiments, the first network device may be a core network device, such as a session management function device (SMF).

In this case, the first message may be any message or signaling used for communication between the core network device and the terminal device, for example, the first message may be a non-access stratum (NAS) message.

In some embodiments, the first message is used to establish, modify or delete a connection in the mobile network.

Optionally, the connection in the mobile network includes a control plane connection and/or a user plane connection. Wherein, the control plane connection may be, for example, an RRC connection, a NAS connection, etc.; the user plane connection may be, for example, a protocol data unit (PDU) session, a QOS data flow, a PDN connection, an EPS bearer, a data radio bearer (DRB), etc.

In some other embodiments, the first message is used to establish a data flow, modify a data flow, or delete a data flow. In other words, the first message may be a data flow establishment message, a data flow modification message or a data flow deletion message.

In some embodiments, the first condition information may be included in the first message, that is, the first network device may notify the terminal device of the change of the QoS related information while notifying the terminal device of the condition for changing the QoS related information. As an example, the first network device may send the first condition information to the terminal device during the process of establishing, modifying or deleting the PDU session. As another example, the first network device may send the first condition information to the terminal device during a process of establishing, modifying or deleting a data flow.

In some embodiments, if the first condition information is configured through an RRC message, or in other words, if the first condition information is configured by an access network device, for Example 2, the first condition information may include at least one of the following:
The time information for changing the binding relationship between the radio bearer and the data flow;
The location information for changing the binding relationship between the radio bearer and the data flow;
The time information for changing the configuration parameter of the radio bearer;
The location information for changing the configuration parameter of the radio bearer.

In some embodiments, if the first condition information is configured through a NAS message, or in other words, if the first condition information is configured by an access network device, for Example 2, the first condition information may include at least one of the following:
The time information for changing the QoS parameter;
The location information for changing the QoS parameter;
The time information for changing the binding relationship between the data flow and the filter;
The location information for changing the binding relationship between the data flow and the filter.

In some embodiments of the present application, the first condition information may also be configured independently of the first message, for example, configured through a third message, and the present application is not limited thereto. For example, the first network device may notify the terminal device of the first condition information when the terminal device registers with the network, or in a location update procedure or an RRC connection establishment procedure.

In some other embodiments, the first condition information may be predefined, or in other words, default.

It should be noted that in the embodiment of this application, "predefined" can be realized by pre-saving corresponding codes, tables in devices (for example, including terminal devices and network devices) or other methods that can be used to indicate the related information. The application does not limit its specific implementation. For example, predefined may refer to defined in the protocol.

In the embodiment of the present application, the "protocol" may refer to a standard protocol in the communication field, for example, it may include the LTE protocol, the NR protocol, and related protocols applied in future communication systems, which is not limited in the present application.

Optionally, in some embodiments, the first message includes at least one of the following:
The information of the data flow or bearer corresponding to the changed QoS parameter, and the information of the application corresponding to the data flow or bearer.

Optionally, in some embodiments, the method also includes:
S230. Adjust the application layer parameter or application layer behavior of the terminal device according to the first condition information.

As an example, the terminal device may adjust the application layer parameter or application layer behavior of the terminal device according to the effective time or execution time of the QoS related information, for example, at the effective time or execution time, adjust the application layer parameters of the terminal device or application layer behavior.

Due to changes in QoS related information, timely adjustment of application layer parameter or application layer behavior of terminal device will help ensure the communication quality of subsequent services.

In some embodiments, the application layer behavior may include, for example, the split point location and the application layer parameter.

In some embodiments, the application layer parameter may include the encoding parameter, for example, wherein the encoding parameter may include at least one of the following: encoding rate, encoding format, occupied bandwidth, compression rate, data packet size, data packet transmission interval/period, data packet sending time point, terminal moving speed, trajectory.

As an example, the terminal device can adjust the split point of the model according to the change of the QoS parameter (such as the guaranteed bit rate (GBR)) of the QoS flow output by the AI interface, that is, different model split points are used before and after the execution time of changing the QoS related information.

For example, assuming that the uplink GBR in the QoS parameter is updated from 800 Mbps to 400 Mbps, in order to ensure that the communication quality of the service is not affected, as shown in Table 1, the split point can be adjusted from 1 to 2, so that the terminal device needs to be responsible for more calculation works, but the output uplink data rate can be reduced to 360Mbps, which is in line with the required guaranteed range of the updated GBR.

**Table 1**

| split point position | Approximate output data size (M Bvte) | Required uplink data rate (Mbps) | |
|---|---|---|---|
| Candidate split point 0 | 0.6 | 145 | |
| Candidate split point 1 | 3 | 720 | Use split point 1 before change |
| Candidate split point 2 | 1.5 | 360 | Use split point 2 before the change |

In some other embodiments, the value range of the QoS parameter may have a corresponding relationship with the value range of the application layer parameter. Therefore, the terminal device may determine the value of the changed application layer parameter according to the changed value range of the QoS parameter in combination with the corresponding relationship. Table 2 shows a correspondence.

**Table 2**

| QoS parameter value combination | Application layer parameter (coding rate) value |
|---|---|
| First QoS parameter value combination | value of the first encoding rate |
| Second QoS parameter value combination | |
| Third QoS parameter value combination | value of the second encoding rate |
| Fourth QoS parameter value combination | |
| Fifth QoS parameter value combination | |
| Sixth QoS parameter value combination | value of the third encoding rate |
| other value combinations | value of the fourth encoding rate |

Assuming that the value of the QoS parameter before the change falls in the first QoS parameter value combination, and the value of the QoS parameter after the change falls in the fourth QoS parameter value combination, then in order to ensure the communication quality of the service is not affected, as shown in Table 2, the value of the encoding rate is adjusted from the value of the first encoding rate to the value of the second encoding rate.

Therefore, in the embodiment of the present application, when the QoS related information needs to be changed, the terminal device changes the QoS related information according to the first condition information, instead of changing immediately, which can ensure that there is enough time to change the application layer parameters or adjust the application layer behavior, therefore, is beneficial to avoid the problem that the QoS related information is changed immediately but the application layer parameters or the application layer behavior are not adjusted in time to affect the communication quality of the service.

### Embodiment two

Continuing to refer to FIG. 4, in S310, the first network device may also send a second message to the second network device, wherein the second message is used to indicate a change of QoS related information.

It should be understood that, for the specific implementation manner of the second message, reference may be made to the related description of the first message, and details are not repeated here for brevity.

That is to say, when the QoS-related information needs to be changed, the first network device can not only notify the terminal device, but also pass through other network devices, so that both parties to the service can uniformly and adaptively adjust the application layer parameters or application layer behavior, thereby ensuring business communication quality.

Optionally, in this embodiment of the application, the second network device may be, for example, an access network device, such as a base station, or may also be a core network device, such as a user plane function (UPF), or may be an application function (AF), or referred to as an application server.

Optionally, in some embodiments, the second message may include second condition information, which is used to determine the effective conditions of the changed QoS parameters and/or binding relationship and/or the execution condition for changing the QoS parameters and/or binding relationship.

In some other embodiments, the second condition information may also be predefined or default.

In some embodiments, the second condition information includes at least one of the following:
The time information for changing the QoS parameter;
The location information for changing the QoS parameter;
The time information for changing the binding relationship between the data flow and the filter;
The location information for changing the binding relationship between the data flow and the filter.

In other embodiments, the second condition information includes at least one of the following:
The effective time of the changed QoS parameters;
The effective position of the changed QoS parameters;
The effective time of the changed binding relationship between the data flow and filter;
The effective position of the changed binding relationship between the data flow and filter.

It should be understood that, for the specific implementation of the second condition information, reference is made to the related description of the first condition information, and for the sake of brevity, details are not repeated here.

Further, in S320, the second network device determines a condition for changing the QoS related information according to the second condition information.

For specific implementation, reference is made to the relevant description of S220, which will not be repeated here.

Optionally, in some embodiments, the effective time or execution time of the QoS related information determined according to the first condition information may be the same as the effective time or execution time of the QoS related information determined according to the first condition information, in this way, it is beneficial to avoid the problem that one party changes the QoS related information and application layer parameters or application layer behavior, while the other party does not change the relevant parameter, resulting in parameter mismatch and affecting the communication quality of the service.

Optionally, the second embodiment further includes: S330, the second network device adjusts an application layer parameter or an application layer behavior of the second network device according to the second condition information.

For a specific adjustment method, reference may be made to related implementations of S230, which will not be repeated here.

Therefore, in this embodiment of the application, when the QoS related information needs to be adjusted, the second network device changes the QoS related information according to the second condition information, instead of changing it immediately, which can ensure that there is enough time for the adjustment of parameters or application layer behavior. Therefore, it is beneficial to avoid the problem that the QoS related information is adjusted immediately but the application layer parameters or application layer behavior are not adjusted in time to affect the communication quality of the service.

### Embodiment Three

In the foregoing first and second embodiments, the terminal device and the second network device can adjust respective application layer parameter or application layer behavior according to the changed QoS related information.

In the third embodiment, the terminal device and the second network device may negotiate to determine application layer parameter or application layer behavior.

As an embodiment, the terminal device sends first reference information to the second network device, where the first reference information is used by the second network device to determine a target application layer parameter of the second network device.

For example, the first reference information may include, for example, the aforementioned first condition information, or may also include at least one of the following:
The changed QoS parameter of the terminal device;
The information about the data flow corresponding to the QoS parameter;
The information about the application corresponding to the data flow;
The target application layer parameter or application layer behavior determined by the terminal device.

For example, the second network device may determine an application layer parameter or an application layer behavior according to the changed QoS parameter of the terminal device, or determine the target application layer parameter determined by the terminal device as its own application layer parameter, or, both the second network device and the terminal device execute different split points at the effective time or execution time.

Optionally, in some embodiments, the second network device may send the second reference information to the terminal device, for the terminal device to adjust the application layer parameters of the terminal device.

For example, the second reference information may include, for example, the aforementioned second condition information, or may also include at least one of the following:
The changed QoS parameter of the second network device;
The information about the data flow corresponding to the QoS parameter;
The information about the application corresponding to the data flow;
The target application layer parameter or application layer behavior determined by the second network device.

For example, the terminal device may determine the target application layer parameter or application layer behavior according to the changed QoS parameter of the second network device, or determine the target application layer parameter determined by the second network device as its own application layer parameter, or, both the second network device and the terminal device execute different split points at the effective time or execution time.

In this embodiment of the present application, the terminal device and the second network device may interact by transmitting application layer data through a user plane to determine target application layer parameter or application layer behavior. Adjustment of application layer parameter or application layer behavior at a uniform time through negotiation helps to ensure communication quality of subsequent services.

It should be understood that Embodiment one, Embodiment two, and Embodiment three above may be implemented independently, or may also be implemented in combination. For example, Embodiment one may be implemented in combination with Embodiment two. The first network device notifies the change information of the QoS related information simultaneously to the terminal device and the second network device. In this case, the terminal device and the second network device can learn the application layer behavior (such as which split point to use or which encoding method to use, etc.) used by the sending side for processing the data packet (e.g., it may include uplink and/or downlink book packets), at different time (for example, before and after the execution time, or before and after the effective time), so that corresponding processing can be carried out at the receiving side without causing the problem of inconsistency affecting the transmission quality.

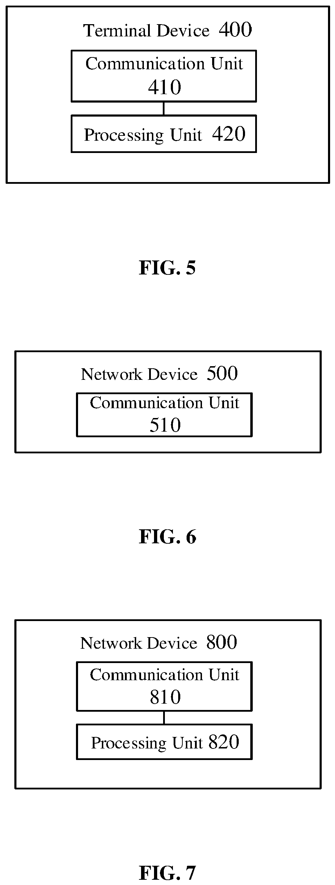

The method embodiment of the present application is described in detail above in conjunction with FIG. 4, and the device embodiment of the present application is described in detail below in conjunction with FIG. 5 to FIG. 10. It should be understood that the device embodiment and the method embodiment correspond to each other, and similar descriptions can refer to the method embodiment.

FIG. 5 shows a schematic block diagram of a terminal device 400 according to an embodiment of the present application. As shown in FIG. 5, the terminal device 400 includes:
a communication unit 410 configured to receive a first message sent by a first network device, wherein the first message is used to determine a change in quality of service QoS related information; and
a processing unit 420 configured to determine a condition for changing the QoS related information according to first condition information.

Optionally, in some embodiments, the first condition information is included in the first message.

Optionally, in some embodiments, the first condition information is predefined, or the first condition information is preconfigured by the first network device.

Optionally, in some embodiments, the first message includes at least one of:
a QoS parameter of a data flow that need to be changed;
a QoS parameter of a bearer that need to be changed;
a binding relationship of the data flow that needs to be changed; and
a binding relationship of the bearer that needs to be changed.

Optionally, in some embodiments, the first condition information includes at least one of:
time information for changing the QoS parameter;
location information for changing the QoS parameter;
time information for changing a binding relationship between the data flow and a filter;
location information for changing the binding relationship between the data flow and the filter;
time information for changing a binding relationship between a radio bearer and the data flow;
location information for changing the binding relationship between the radio bearer and the data flow;
time information for changing a configuration parameter of the radio bearer; and
location information for changing the configuration parameter of the radio bearer.

Optionally, in some embodiments, the time information is used to indicate a specific time point or time period.

Optionally, in some embodiments, the time information includes first time information and a first time offset, and the first time offset is a time offset relative to the first time information.

Optionally, in some embodiments, the first time information is used to indicate a sending time of the first message.

Optionally, in some embodiments, the first message includes at least one of: a changed QoS parameter of a data flow;
a changed QoS parameter of a bearer;
a changed binding relationship of the data flow; and
a changed binding relationship of the bearer.

Optionally, in some embodiments, the first condition information includes at least one of:
an effective time of the changed QoS parameter;
an effective location of the changed QoS parameter;
an effective time of a changed binding relationship between the data flow and a filter;
an effective location of the changed binding relationship between the data flow and the filter;
an effective time of a changed binding relationship between a radio bearer and the data flow;
an effective location of the changed binding relationship between the radio bearer and the data flow;
an effective time of a changed radio bearer configuration parameter;
an effective location of the changed radio bearer configuration parameter.

Optionally, in some embodiments, the first message includes: information of the data flow or bearer corresponding to the QoS parameter that has been changed or needs to be changed, and/or information of the application corresponding to the data flow or bearer.

Optionally, in some embodiments, the first message is used to establish, modify or delete a connection in a mobile network.

Optionally, in some embodiments, the processing unit 420 is further configured to:
adjust an application layer parameter or an application layer behavior of the terminal device according to the first condition information.

Optionally, in some embodiments, the processing unit 420 is further configured to:
determine a target application layer parameter of the terminal device according to a changed QoS parameter and a first corresponding relationship, wherein the first corresponding relationship is a corresponding relationship between a QoS parameter and an application layer parameter.

Optionally, in some embodiments, the communication unit 410 is further configured to: send first reference information to a second network device, wherein the first reference information is used by the second network device to determine a target application layer parameter or application layer behavior of the second network device.

Optionally, in some embodiments, the first reference information includes at least one of:
time information for changing a QoS parameter;
location information for changing the QoS parameter;
information of a data flow corresponding to the QoS parameter;
information of an application corresponding to the data flow;
a changed QoS parameter of the terminal device; and
a target application layer parameter or application layer behavior determined by the terminal device.

Optionally, in some embodiments, the processing unit 420 is further configured to: adjust an application layer parameter of the terminal device according to second reference information sent by a second network device.

Optionally, in some embodiments, the second reference information includes at least one of:
time information for changing a QoS parameter;
location information for changing the QoS parameter;
information of a data flow corresponding to the QoS parameter;
information of an application corresponding to the data flow; and
a target application layer parameter or application layer behavior determined by the second network device.

Optionally, in some embodiments, the first network device is a core network device, or the first network device is an access network device.

Optionally, the first message is a non-access stratum NAS message or a radio resource control RRC connection reconfiguration message.

Optionally, in some embodiments, the above-mentioned communication unit may be a communication interface or a transceiver, or an input-output interface of a communication chip or a system-on-chip. The aforementioned processing unit may be one or more processors.

It should be understood that the terminal device 400 according to the embodiment of the present application may correspond to the terminal device in the method embodiment of the present application, and the above-mentioned and other operations and/or functions of each unit in the terminal device 400 are to realize the method shown in FIG. 4 For the sake of brevity, the corresponding process of the terminal device will not be repeated here.

FIG. 6 is a schematic block diagram of a network device according to an embodiment of the present application. The network device 500 of FIG. 6 includes:
a communication unit 510, configured to send first condition information to a terminal device, wherein the first condition information is used by the terminal device to determine a condition for changing quality of service QoS related information.

Optionally, in some embodiments, the first condition information is included in a first message, and the first message is used to determine a change of the quality of service QoS related information.

Optionally, in some embodiments, the first condition message is configured to the terminal device by the network device before a first message, and wherein the first message is used to determine a change of the quality of service QoS related information.

Optionally, the first message includes at least one of: a quality of service QoS parameter of a data flow that need to be changed;
a QoS parameter of a bearer that need to be changed;
a binding relationship of the data flow that needs to be changed; and
a binding relationship of the bearer that needs to be changed.

Optionally, in some embodiments, the first condition information includes at least one of:
time information for changing the QoS parameter;
location information for changing the QoS parameter;
time information for changing a binding relationship between the data flow and a filter;
location information for changing the binding relationship between the data flow and the filter;
time information for changing a binding relationship between a radio bearer and the data flow;
location information for changing the binding relationship between the radio bearer and the data flow;
time information for changing a configuration parameter of the radio bearer; and
location information for changing the configuration parameter of the radio bearer.

Optionally, in some embodiments, the time information is used to indicate a specific time point or time period.

Optionally, in some embodiments, the time information includes first time information and a first time offset, and the first time offset is a time offset relative to the first time information.

Optionally, in some embodiments, the first time information is used to indicate a sending time of the first message.

Optionally, the first message includes at least one of: a changed quality of service QoS parameter of a data flow;
a changed QoS parameter of a bearer;
a changed binding relationship of the data flow; and
a changed binding relationship of the bearer.

Optionally, the first condition information includes at least one of: an effective time of the changed QoS parameter;
an effective location of the changed QoS parameter;
an effective time of a changed binding relationship between the data flow and a filter;
an effective location of the changed binding relationship between the data flow and the filter;
an effective time of a changed binding relationship between a radio bearer and the data flow;
an effective location of the changed binding relationship between the radio bearer and the data flow;
an effective time of a changed radio bearer configuration parameter; and
an effective location of the changed radio bearer configuration parameter.

Optionally, in some embodiments, the first message includes:
information of the data flow or bearer corresponding to the QoS parameter that has been changed or needs to be changed, and/or information of the application corresponding to the data flow or bearer.

Optionally, in some embodiments, the first message is used to establish, modify or delete a connection in a mobile network.

Optionally, in some embodiments, the communication unit 510 is further configured to: send a second message to a second network device, wherein the second message is used to determine change information of the QoS related information;
wherein the second message includes second condition information, and the second condition information is used for the second network device to determine a condition for changing the QoS related information.

Optionally, in some embodiments, the second message includes at least one of:
a quality of service QoS parameter of a data flow that need to be changed;
a QoS parameter of a bearer that need to be changed;
a binding relationship of the data flow that needs to be changed; and
a binding relationship of the bearer that needs to be changed.

Optionally, in some embodiments, the second condition information includes at least one of:
time information for changing the QoS parameter;
location information for changing the QoS parameter;
time information for changing a binding relationship between the data flow and a filter; and
location information for changing the binding relationship between the data flow and the filter.

Optionally, in some embodiments, the time information is used to indicate a specific time point or time period; or
the time information includes second time information and a second time offset, wherein the second time offset is a time offset relative to the second time information.

Optionally, in some embodiments, the second time information is used to indicate a sending time of the second message.

Optionally, in some embodiments, the second message includes at least one of:
a changed quality of service QoS parameter of a data flow;
a changed QoS parameter of a bearer;
a changed binding relationship of the data flow; and
a changed binding relationship of the bearer.

Optionally, in some embodiments, the second condition information includes at least one of:
an effective time of the changed QoS parameter;
an effective location of the changed QoS parameter;
an effective time of a changed binding relationship between the data flow and a filter; and
an effective location of the changed binding relationship between the data flow and the filter.

Optionally, the second network device includes at least one of: an application server, an access network device, and a core network device.

Optionally, in some embodiments, the above-mentioned communication unit may be a communication interface or a transceiver, or an input-output interface of a communication chip or a system-on-chip. The aforementioned processing unit may be one or more processors.

It should be understood that the network device 500 according to the embodiment of the present application may correspond to the network device in the method embodiment of the present application, and the above-mentioned and other operations and/or functions of each unit in the network device 500 are for realizing the method shown in FIG. 4 For the sake of brevity, the corresponding process of the first network device in the embodiment is not repeated here.

FIG. 7 is a schematic block diagram of a network device according to an embodiment of the present application. The network device 800 of FIG. 7 includes:
a communication unit 810, configured to receive second message sent by a first network device, wherein the second message is used to determine change information of quality of service QoS related information; and
a processing unit 820, configured to determine a condition for changing the QoS related information.

Optionally, in some embodiments, the second condition information is included in the second message.

Optionally, in some embodiments, the second condition information is predefined, or the second condition information is preconfigured by the first network device.

Optionally, in some embodiments, the second message includes at least one of:
a quality of service QoS parameter of a data flow that need to be changed;
a QoS parameter of a bearer that need to be changed;
a binding relationship of the data flow that needs to be changed; and
a binding relationship of the bearer that needs to be changed.

Optionally, in some embodiments, the second condition information includes at least one of:
time information for changing the QoS parameter;
location information for changing the QoS parameter;
time information for changing a binding relationship between the data flow and a filter; and
location information for changing the binding relationship between the data flow and the filter.

Optionally, in some embodiments, the time information is used to indicate a specific time point or time period.

Optionally, in some embodiments, the time information includes second time information and a second time offset, and the second time offset is a time offset relative to the second time information.

Optionally, in some embodiments, the second time information is used to indicate a sending time of the second message.

Optionally, in some embodiments, the second message includes at least one of:
a changed QoS parameter of a data flow;
a changed QoS parameter of a bearer;
a changed binding relationship of the data flow; and
a changed binding relationship of the bearer.

Optionally, in some embodiments, the second condition information includes at least one of:
an effective time of the changed QoS parameter;
an effective location of the changed QoS parameter;
an effective time of a changed binding relationship between the data flow and a filter; and
an effective location of the changed binding relationship between the data flow and the filter.

Optionally, in some embodiments, the second message includes: the data flow or bearer corresponding to the QoS parameter that needs to be changed or has been changed, and/or information about the application corresponding to the data flow or bearer.

Optionally, in some embodiments, the processing unit 820 is further configured to: adjust an application layer parameter or an application layer behavior of the network device according to the second condition information.

Optionally, in some embodiments, the processing unit 820 is further configured to:
determine a target application layer parameter of the network device according to the changed QOS parameter and a second corresponding relationship, wherein the second corresponding relationship is a corresponding relationship between a QoS parameter and an application layer parameter.

Optionally, in some embodiments, the communication unit 810 is further configured to:
send second reference information to a terminal device, wherein the second reference information is used by the terminal device to determine a target application layer parameter or application layer behavior of the terminal device.

Optionally, in some embodiments, the second reference information includes at least one of:
time information for changing a QoS parameter;
location information for changing the QoS parameter;
information of a data flow corresponding to the QoS parameter;
information of an application corresponding to the data flow; and
a target application layer parameter or application layer behavior determined by the network device.

Optionally, in some embodiments, the communication unit 810 is further configured to: receive first reference information sent by the terminal device; and
the processing unit 820 is further configured to determine a target application layer parameter of the network device according to the first reference information.

Optionally, in some embodiments, the first reference information includes at least one of:
time information for changing a QoS parameter;
location information for changing the QoS parameter;
information of a data flow corresponding to the QoS parameter;
information of an application corresponding to the data flow;
a changed QoS parameter of the terminal device; and
a target application layer parameter or application layer behavior determined by the terminal device.

Optionally, in some embodiments, the network device includes at least one of:
an application server, an access network device, and a core network device.

Optionally, in some embodiments, the first network device is a core network device, and the first network device is an access network device.

Optionally, in some embodiments, the above-mentioned communication unit may be a communication interface or a transceiver, or an input-output interface of a communication chip or a system-on-chip. The aforementioned processing unit may be one or more processors.

It should be understood that the network device 800 according to the embodiment of the present application may correspond to the network device in the method embodiment of the present application, and the above-mentioned and other operations and/or functions of each unit in the network device 800 are to implement the method shown in FIG. 4 For the sake of brevity, the corresponding process of the second network device in the embodiment is not repeated here.

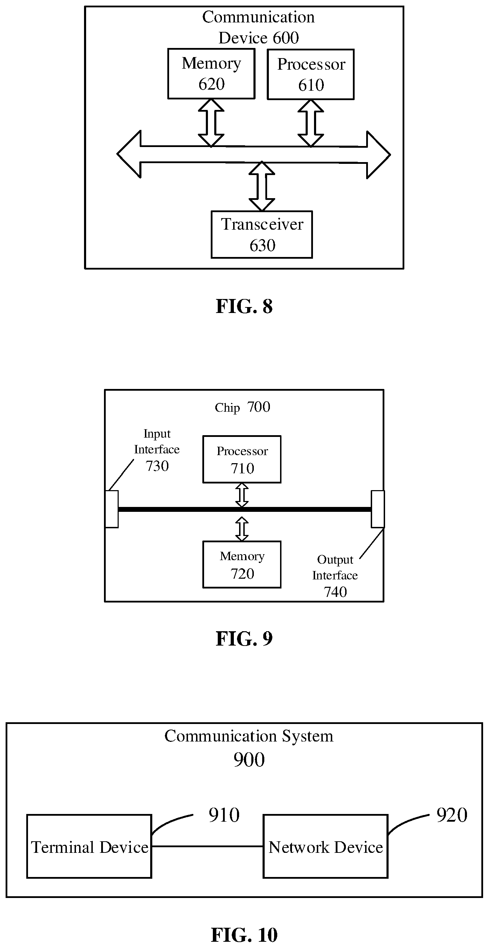

FIG. 8 is a schematic structural diagram of a communication device 600 provided by an embodiment of the present application. The communication device 600 shown in FIG. 8 includes a processor 610, and the processor 610 can invoke and run a computer program from a memory, so as to implement the method in the embodiment of the present application.

Optionally, as shown in FIG. 8, the communication device 600 may further include a memory 620. Wherein, the processor 610 can invoke and run a computer program from the memory 620, so as to implement the method in the embodiment of the present application.

The memory 620 may be an independent device independent of the processor 610, or may be integrated in the processor 610.

Optionally, as shown in FIG. 8, the communication device 600 may further include a transceiver 630, and the processor 610 may control the transceiver 630 to communicate with other devices, specifically, to send information or data to other devices, or receive information or data sent by other devices.

The transceiver 630 may include a transmitter and a receiver. The transceiver 630 may further include an antenna(s), and the number of the antenna may be one or more.

Optionally, the communication device 600 may be the network device of the embodiment of the present application, and the communication device 600 may implement the corresponding processes implemented by the first network device or the second network device in the methods of the embodiment of the present application. For the sake of brevity, it will not be repeated herein.

Optionally, the communication device 600 may be the mobile terminal/terminal device, and the communication device 600 may implement the corresponding processes implemented by the method provided by mobile terminal/terminal device in the embodiments of the present application. For the sake of brevity, it will not be repeated herein.

FIG. 9 is a schematic structural diagram of a chip 700 according to an embodiment of the present application. The chip 700 shown in FIG. 9 includes a processor 710, and the processor 710 can invoke and run a computer program from a memory, so as to implement the method in the embodiment of the present application.

Optionally, as shown in FIG. 9, the chip 700 may further include a memory 720. The processor 710 may invoke and run a computer program from the memory 720, so as to implement the method in the embodiment of the present application.

The memory 720 may be an independent device independent of the processor 710, or may be integrated in the processor 710.

Optionally, the chip 700 may also include an input interface 730. The processor 710 can control the input interface 730 to communicate with other devices or chips, specifically, can obtain information or data sent by other devices or chips.

Optionally, the chip 700 may also include an output interface 740. The processor 710 can control the output interface 740 to communicate with other devices or chips, specifically, can output information or data to other devices or chips.

Optionally, the chip can be applied to the network device in the embodiments of the present application, and the chip can implement the corresponding processes implemented by the first network device or the second network device in the methods of the embodiments of the present application. For the sake of brevity, it will not be repeated herein.

Optionally, the chip can be applied to the mobile terminal/terminal device, and the chip can implement the corresponding processes implemented by the mobile terminal/terminal device in the methods of the embodiments of the present application. For the sake of brevity, it will not be repeated herein.

It should be understood that the chip mentioned in the embodiment of the present application may also be referred to as a system level chip, a system chip, a chip system or a system-on-chip.

FIG. 10 is a schematic block diagram of a communication system 900 provided by an embodiment of the present application. As shown in FIG. 10, the communication system 900 includes a terminal device 910 and a network device 920.

The terminal device 910 can be used to realize the corresponding functions realized by the terminal device in the above method, and the network device 920 can be used to realize the corresponding functions realized by the first network device or the second network device in the above method. For the sake of brevity, it will not be repeated herein.

It should be understood that the processor in the embodiment of the present application may be an integrated circuit chip, which has a signal processing capability. In the implementation process, each step of the above-mentioned method embodiments may be completed by an integrated logic circuit of hardware in a processor or instructions in the form of software. The above-mentioned processor may be a general-purpose processor, a digital signal processor (DSP), an application specific integrated circuit (ASIC), a field programmable gate array (FPGA) or other programmable logic devices, discrete gate or transistor logic devices, discrete hardware components. Various methods, steps, and logic block diagrams disclosed in the embodiments of the present application may be implemented or executed. The general-purpose processor may be a microprocessor, or the processor may be any conventional processor, or the like. The steps of the method disclosed in connection with the embodiments of the present application may be directly implemented by a hardware decoding processor, or implemented by a combination of hardware and software modules in the decoding processor. The software module can be located in a mature storage medium in the field such as random access memory, flash memory, read-only memory, programmable read-only memory or electrically erasable programmable memory, or register. The storage medium is located in the memory, and the processor reads the information in the memory, and completes the steps of the above method in combination with its hardware.

It can be understood that the memory in the embodiments of the present application may be a volatile memory or a nonvolatile memory, or may include both volatile and nonvolatile memories. Among them, the non-volatile memory can be read-only memory (ROM), programmable read-only memory (PROM), erasable programmable read-only memory (Erasable PROM, EPROM), electrically programmable Erase Programmable Read-Only Memory (Electrically EPROM, EEPROM) or Flash. The volatile memory may be Random Access Memory (RAM), which acts as an external cache. By way of illustration and not limitation, many forms of RAM are available such as Static RAM (SRAM), Dynamic RAM (DRAM), Synchronous DRAM (SDRAM), double data rate synchronous dynamic random access memory (Double Data Rate SDRAM, DDR SDRAM), enhanced synchronous dynamic random access memory (Enhanced SDRAM, ESDRAM), synchronous connection dynamic random access memory (Synchlink DRAM, SLDRAM ) and Direct Memory Bus Random Access Memory (Direct Rambus RAM, DR RAM). It should be noted that the memory of the systems and methods described herein is intended to include, but not be limited to, these and any other suitable types of memory.

It should be understood that the above-mentioned memory is illustrative but not restrictive. For example, the memory in the embodiment of the present application may also be a static random access memory (static RAM, SRAM), a dynamic random access memory (dynamic RAM, DRAM), Synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous connection Dynamic random access memory (synch link DRAM, SLDRAM) and direct memory bus random access memory (Direct Rambus RAM, DR RAM), etc. That is, the memory in the embodiments of the present application is intended to include, but not be limited to, these and any other suitable types of memory.

The embodiment of the present application also provides a computer-readable storage medium for storing computer programs.

Optionally, the computer-readable storage medium can be applied to the network device in the embodiments of the present application, and the computer program enables the computer to execute the corresponding processes implemented by the first network device or the second network device in the methods of the embodiments of the present application. For brevity, it will not be repeated herein.

Optionally, the computer-readable storage medium can be applied to the mobile terminal/terminal device in the embodiments of the present application, and the computer program enables the computer to execute the corresponding processes implemented by the mobile terminal/terminal device in the various methods of the embodiments of the present application, for the sake of brevity, it is not repeated here.

The embodiment of the present application also provides a computer program product, including computer program instructions.

Optionally, the computer program product may be applied to the network device in the embodiment of the present application, and the computer program instructions cause the computer to execute the corresponding process implemented by the first network device or the second network device in each method of the embodiment of the present application. For the sake of brevity, the details are not repeated here.

Optionally, the computer program product can be applied to the mobile terminal/terminal device in the embodiments of the present application, and the computer program instructions cause the computer to execute the corresponding processes implemented by the mobile terminal/terminal device in the methods of the embodiments of the present application, For the sake of brevity, details are not repeated here.

The embodiment of the present application also provides a computer program.

Optionally, the computer program can be applied to the network device in the embodiment of the present application. When the computer program is run on the computer, the computer executes the corresponding process implemented by the first network device or the second network device in each method of the embodiment of the present application. For the sake of brevity, it will not be repeated here.

Optionally, the computer program can be applied to the mobile terminal/terminal device in the embodiment of the present application. When the computer program is run on the computer, the computer executes each method in the embodiment of the present application to be implemented by the mobile terminal/terminal device. For the sake of brevity, the corresponding process will not be repeated here.

Those skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Those skilled in the art may use different methods to implement the described functions for each specific application, but such implementation should not be regarded as exceeding the scope of the present application.

Those skilled in the art can clearly understand that for the convenience and brevity of the description, the specific operating process of the above-described system, device and unit can refer to the corresponding process in the foregoing method embodiment, which will not be repeated here.

In the several embodiments provided in this application, it should be understood that the disclosed systems, devices and methods may be implemented in other ways. For example, the device embodiments described above are only illustrative. For example, the division of the units is only a logical function division. In actual implementation, there may be other division methods. For example, multiple units or components can be combined or may be integrated into another system, or some features may be ignored, or not implemented. In another point, the mutual coupling or direct coupling or communication connection shown or discussed may be through some interfaces, and the indirect coupling or communication connection of devices or units may be in electrical, mechanical or other forms.

The units described as separate components may or may not be physically separated, and the components shown as units may or may not be physical units, that is, they may be located in one place, or may be distributed to multiple network units. Part or all of the units can be selected according to actual needs to achieve the purpose of the solution of this embodiment.

In addition, each functional unit in each embodiment of the present application may be integrated into one processing unit, each unit may exist separately physically, or two or more units may be integrated into one unit.

If the functions described above are realized in the form of software function units and sold or used as independent products, they can be stored in a computer-readable storage medium. Based on this understanding, the technical solution of the present application is essentially or the part that contributes to the prior art or the part of the technical solution can be embodied in the form of a software product, and the computer software product is stored in a storage medium, including several instructions that are used to make a computer device (which may be a personal computer, a server, or a network device, etc.) execute all or part of the steps of the methods described in the various embodiments of the present application. The aforementioned storage media include: U disk, mobile hard disk, read-only memory (ROM), random access memory (RAM), magnetic disk or optical disk and other media that can store program codes.

The above is only a specific implementation of the application, but the scope of protection of the application is not limited thereto. Anyone familiar with the technical field can easily think of changes or substitutions within the technical scope disclosed in the application. Should be covered within the protection scope of this application. Therefore, the protection scope of the present application should be based on the protection scope of the claims.

## Claims

1. A method for wireless communication, comprising:
receiving, by a terminal device, a first message sent by a first network device, wherein the first message is used to determine a change in quality of service QoS related information; and
determining, by the terminal device, a condition for changing the QoS related information according to first condition information.

2. The method according to claim 1, wherein the first condition information is comprised in the first message.

3. The method according to claim 1, wherein the first condition information is predefined, or the first condition information is preconfigured by the first network device.

4. The method according to any one of claims 1 to 3, wherein the first message comprises at least one of:
a QoS parameter of a data flow that need to be changed;
a QoS parameter of a bearer that need to be changed;
a binding relationship of the data flow that needs to be changed; and
a binding relationship of the bearer that needs to be changed.

5. The method according to claim 4, wherein the first condition information comprises at least one of:
time information for changing the QoS parameter;
location information for changing the QoS parameter;
time information for changing a binding relationship between the data flow and a filter;
location information for changing the binding relationship between the data flow and the filter;
time information for changing a binding relationship between a radio bearer and the data flow;
location information for changing the binding relationship between the radio bearer and the data flow;
time information for changing a configuration parameter of the radio bearer; and
location information for changing the configuration parameter of the radio bearer.

6. The method according to claim 5, wherein the time information is used to indicate a specific time point or time period.

7. The method according to claim 5, wherein the time information comprises first time information and a first time offset, and the first time offset is a time offset relative to the first time information.

8. The method according to claim 7, wherein the first time information is used to indicate a sending time of the first message.

9. The method according to any one of claims 1 to 3, wherein the first message comprises at least one of:
a changed QoS parameter of a data flow;
a changed QoS parameter of a bearer;
a changed binding relationship of the data flow; and
a changed binding relationship of the bearer.

10. The method according to claim 9, wherein the first condition information comprises at least one of:
an effective time of the changed QoS parameter;
an effective location of the changed QoS parameter;
an effective time of a changed binding relationship between the data flow and a filter;
an effective location of the changed binding relationship between the data flow and the filter;
an effective time of a changed binding relationship between a radio bearer and the data flow;
an effective location of the changed binding relationship between the radio bearer and the data flow;
an effective time of a changed radio bearer configuration parameter;
an effective location of the changed radio bearer configuration parameter.

11. The method according to any one of claims 1 to 11, wherein the first message comprises:
information of the data flow or bearer corresponding to the QoS parameter that has been changed or needs to be changed, and/or information of the application corresponding to the data flow or bearer.

12. The method according to any one of claims 1 to 11, wherein the first message is used to establish, modify or delete a connection in a mobile network.

13. The method according to any one of claims 1 to 12, further comprising:
adjusting an application layer parameter or an application layer behavior of the terminal device according to the first condition information.

14. The method according to claim 13, further comprising:
determining a target application layer parameter of the terminal device according to a changed QoS parameter and a first corresponding relationship, wherein the first corresponding relationship is a corresponding relationship between a QoS parameter and an application layer parameter.

15. The method according to any one of claims 1 to 14, further comprising:
sending, by the terminal device, first reference information to a second network device, wherein the first reference information is used by the second network device to determine a target application layer parameter or application layer behavior of the second network device.

16. The method according to claim 15, wherein the first reference information comprises at least one of:
time information for changing a QoS parameter;
location information for changing the QoS parameter;
information of a data flow corresponding to the QoS parameter;
information of an application corresponding to the data flow;
a changed QoS parameter of the terminal device; and
a target application layer parameter or application layer behavior determined by the terminal device.

17. The method according to any one of claims 1 to 16, further comprising:
adjusting an application layer parameter of the terminal device according to second reference information sent by a second network device.

18. The method according to claim 17, wherein the second reference information comprises at least one of:
time information for changing a QoS parameter;
location information for changing the QoS parameter;
information of a data flow corresponding to the QoS parameter;
information of an application corresponding to the data flow; and
a target application layer parameter or application layer behavior determined by the second network device.

19. The method according to any one of claims 1 to 18, wherein the first network device is a core network device, or the first network device is an access network device.

20. The method according to any one of claims 1 to 19, wherein the first message is a non-access stratum NAS message or a radio resource control RRC connection reconfiguration message.

21. A wireless communication method, comprising:
sending, by a first network device, first condition information to a terminal device, wherein the first condition information is used by the terminal device to determine a condition for changing quality of service QoS related information.

22. The method according to claim 21, wherein the first condition information is comprised in a first message, and the first message is used to determine a change of the quality of service QoS related information.

23. The method according to claim 21, wherein the first condition message is configured to the terminal device by the first network device before a first message, and wherein the first message is used to determine a change of the quality of service QoS related information.

24. The method according to claim 22 or 23, wherein the first message comprises at least one of:
a quality of service QoS parameter of a data flow that need to be changed;
a QoS parameter of a bearer that need to be changed;
a binding relationship of the data flow that needs to be changed; and
a binding relationship of the bearer that needs to be changed.

25. The method according to claim 24, wherein the first condition information includes at least one of:
time information for changing the QoS parameter;
location information for changing the QoS parameter;
time information for changing a binding relationship between the data flow and a filter;
location information for changing the binding relationship between the data flow and the filter;
time information for changing a binding relationship between a radio bearer and the data flow;
location information for changing the binding relationship between the radio bearer and the data flow;
time information for changing a configuration parameter of the radio bearer; and
location information for changing the configuration parameter of the radio bearer.

26. The method according to claim 25, wherein the time information is used to indicate a specific time point or time period.

27. The method according to claim 25, wherein the time information comprises first time information and a first time offset, and the first time offset is a time offset relative to the first time information.

28. The method according to claim 27, wherein the first time information is used to indicate a sending time of the first message.

29. The method according to claim 22 or 23, wherein the first message comprises at least one of:
a changed quality of service QoS parameter of a data flow;
a changed QoS parameter of a bearer;
a changed binding relationship of the data flow; and
a changed binding relationship of the bearer.

30. The method according to claim 29, wherein the first condition information comprises at least one of:
an effective time of the changed QoS parameter;
an effective location of the changed QoS parameter;
an effective time of a changed binding relationship between the data flow and a filter;
an effective location of the changed binding relationship between the data flow and the filter;
an effective time of a changed binding relationship between a radio bearer and the data flow;
an effective location of the changed binding relationship between the radio bearer and the data flow;
an effective time of a changed radio bearer configuration parameter; and
an effective location of the changed radio bearer configuration parameter.

31. The method according to any one of claims 22 to 30, wherein the first message comprises:
information of the data flow or bearer corresponding to the QoS parameter that has been changed or needs to be changed, and/or information of the application corresponding to the data flow or bearer.

32. The method according to any one of claims 22 to 31, wherein the first message is used to establish, modify or delete a connection in a mobile network.

33. The method according to any one of claims 21 to 32, further comprising:
sending, by the first network device, a second message to a second network device, wherein the second message is used to determine change information of the QoS related information;
wherein the second message comprises second condition information, and the second condition information is used for the second network device to determine a condition for changing the QoS related information.

34. The method of claim 33, wherein the second message comprises at least one of:
a quality of service QoS parameter of a data flow that need to be changed;
a QoS parameter of a bearer that need to be changed;
a binding relationship of the data flow that needs to be changed; and
a binding relationship of the bearer that needs to be changed.

35. The method according to claim 34, wherein the second condition information comprises at least one of:
time information for changing the QoS parameter;
location information for changing the QoS parameter;
time information for changing a binding relationship between the data flow and a filter; and
location information for changing the binding relationship between the data flow and the filter.

36. The method according to claim 35, wherein the time information is used to indicate a specific time point or time period; or
the time information comprises second time information and a second time offset, wherein the second time offset is a time offset relative to the second time information.

37. The method according to claim 36, wherein the second time information is used to indicate a sending time of the second message.

38. The method of claim 33, wherein the second message comprises at least one of:
a changed quality of service QoS parameter of a data flow;
a changed QoS parameter of a bearer;
a changed binding relationship of the data flow; and
a changed binding relationship of the bearer.

39. The method according to claim 38, wherein the second condition information comprises at least one of:
an effective time of the changed QoS parameter;
an effective location of the changed QoS parameter;
an effective time of a changed binding relationship between the data flow and a filter; and
an effective location of the changed binding relationship between the data flow and the filter.

40. The method according to any one of claims 33 to 39, wherein the second network device comprises at least one of: an application server, an access network device, and a core network device.

41. A wireless communication method, comprising:
receiving, by a second network device, second message sent by a first network device, wherein the second message is used to determine change information of quality of service QoS related information; and
changing, by the second network device, the QoS related information according to second condition information, wherein the second condition information is used to determine a condition for changing the QoS related information.

42. The method of claim 41, wherein the second condition information is comprised in the second message.

43. The method according to claim 41, wherein the second condition information is predefined, or the second condition information is preconfigured by the first network device.

44. The method according to any one of claims 41 to 43, wherein the second message comprises at least one of:
a quality of service QoS parameter of a data flow that need to be changed;
a QoS parameter of a bearer that need to be changed;
a binding relationship of the data flow that needs to be changed; and
a binding relationship of the bearer that needs to be changed.

45. The method according to claim 44, wherein the second condition information comprises at least one of:
time information for changing the QoS parameter;
location information for changing the QoS parameter;
time information for changing a binding relationship between the data flow and a filter; and
location information for changing the binding relationship between the data flow and the filter.

46. The method according to claim 45, wherein the time information is used to indicate a specific time point or time period.

47. The method according to claim 45, wherein the time information includes second time information and a second time offset, and the second time offset is a time offset relative to the second time information.

48. The method according to claim 47, wherein the second time information is used to indicate a sending time of the second message.

49. The method according to any one of claims 41 to 43, wherein the second message comprises at least one of:
a changed QoS parameter of a data flow;
a changed QoS parameter of a bearer;
a changed binding relationship of the data flow; and
a changed binding relationship of the bearer.

50. The method according to claim 49, wherein the second condition information comprises at least one of:
an effective time of the changed QoS parameter;
an effective location of the changed QoS parameter;
an effective time of a changed binding relationship between the data flow and a filter; and
an effective location of the changed binding relationship between the data flow and the filter.

51. The method according to any one of claims 41 to 50, wherein the second message comprises:
the data flow or bearer corresponding to the QoS parameter that needs to be changed or has been changed, and/or information about the application corresponding to the data flow or bearer.

52. The method according to any one of claims 41 to 51, further comprising:
adjusting an application layer parameter or an application layer behavior of the second network device according to the second condition information.

53. The method according to claim 52, further comprising:
determining a target application layer parameter of the second network device according to the changed QOS parameter and a second corresponding relationship, wherein the second corresponding relationship is a corresponding relationship between a QoS parameter and an application layer parameter.

54. The method according to claim 52 or 53, further comprising:
sending, by the second network device, second reference information to a terminal device, wherein the second reference information is used by the terminal device to determine a target application layer parameter or application layer behavior of the terminal device.

55. The method according to claim 54, wherein the second reference information comprises at least one of:
time information for changing a QoS parameter;
location information for changing the QoS parameter;
information of a data flow corresponding to the QoS parameter;
information of an application corresponding to the data flow; and
a target application layer parameter or application layer behavior determined by the second network device.

56. The method according to any one of claims 41 to 51, further comprising:
receiving, by the second network device, first reference information sent by the terminal device; and
determining a target application layer parameter of the second network device according to the first reference information.

57. The method according to claim 56, wherein the first reference information comprises at least one of:
time information for changing a QoS parameter;
location information for changing the QoS parameter;
information of a data flow corresponding to the QoS parameter;
information of an application corresponding to the data flow;
a changed QoS parameter of the terminal device; and
a target application layer parameter or application layer behavior determined by the terminal device.

58. The method according to any one of claims 41 to 57, wherein the second network device comprises at least one of: an application server, an access network device, and a core network device.

59. The method according to any one of claims 41 to 58, wherein the first network device is an access network device.

60. The method according to any one of claims 41 to 58, wherein the first network device is a core network device.

61. A terminal device, comprising:
a communication unit configured to receive a first message sent by a first network device, wherein the first message is used to determine a change in quality of service QoS related information; and
a processing unit configured to determine a condition for changing the QoS related information according to first condition information.

62. The terminal device according to claim 61, wherein the first condition information is comprised in the first message.

63. The terminal device according to claim 61, wherein the first condition information is predefined, or the first condition information is preconfigured by the first network device.

64. The terminal device according to any one of claims 61 to 63, wherein the first message comprises at least one of:
a QoS parameter of a data flow that need to be changed;
a QoS parameter of a bearer that need to be changed;
a binding relationship of the data flow that needs to be changed; and
a binding relationship of the bearer that needs to be changed.

65. The terminal device according to claim 64, wherein the first condition information comprises at least one of:
time information for changing the QoS parameter;
location information for changing the QoS parameter;
time information for changing a binding relationship between the data flow and a filter;
location information for changing the binding relationship between the data flow and the filter;
time information for changing a binding relationship between a radio bearer and the data flow;
location information for changing the binding relationship between the radio bearer and the data flow;
time information for changing a configuration parameter of the radio bearer; and
location information for changing the configuration parameter of the radio bearer.

66. The terminal device according to claim 65, wherein the time information is used to indicate a specific time point or time period.

67. The terminal device according to claim 65, wherein the time information comprises first time information and a first time offset, and the first time offset is a time offset relative to the first time information.

68. The terminal device according to claim 67, wherein the first time information is used to indicate a sending time of the first message.

69. The terminal device according to any one of claims 61 to 63, wherein the first message comprises at least one of:
a changed QoS parameter of a data flow;
a changed QoS parameter of a bearer;
a changed binding relationship of the data flow; and
a changed binding relationship of the bearer.

70. The terminal device according to claim 69, wherein the first condition information comprises at least one of:
an effective time of the changed QoS parameter;
an effective location of the changed QoS parameter;
an effective time of a changed binding relationship between the data flow and a filter;
an effective location of the changed binding relationship between the data flow and the filter;
an effective time of a changed binding relationship between a radio bearer and the data flow;
an effective location of the changed binding relationship between the radio bearer and the data flow;
an effective time of a changed radio bearer configuration parameter;
an effective location of the changed radio bearer configuration parameter.

71. The terminal device according to any one of claims 61 to 71, wherein the first message comprises:
information of the data flow or bearer corresponding to the QoS parameter that has been changed or needs to be changed, and/or information of the application corresponding to the data flow or bearer.

72. The terminal device according to any one of claims 61 to 71, wherein the first message is used to establish, modify or delete a connection in a mobile network.

73. The terminal device according to any one of claims 61 to 72, wherein the processing unit is further configured to:
adjust an application layer parameter or an application layer behavior of the terminal device according to the first condition information.

74. The terminal device according to claim 73, wherein the processing unit is further configured to:
determine a target application layer parameter of the terminal device according to a changed QoS parameter and a first corresponding relationship, wherein the first corresponding relationship is a corresponding relationship between a QoS parameter and an application layer parameter.

75. The terminal device according to any one of claims 61 to 74, wherein the communication unit is further configured to:
send first reference information to a second network device, wherein the first reference information is used by the second network device to determine a target application layer parameter or application layer behavior of the second network device.

76. The terminal device according to claim 75, wherein the first reference information comprises at least one of:
time information for changing a QoS parameter;
location information for changing the QoS parameter;
information of a data flow corresponding to the QoS parameter;
information of an application corresponding to the data flow;
a changed QoS parameter of the terminal device; and
a target application layer parameter or application layer behavior determined by the terminal device.

77. The terminal device according to any one of claims 61 to 76, wherein the processing unit is further configured to:
adjust an application layer parameter of the terminal device according to second reference information sent by a second network device.

78. The terminal device according to claim 77, wherein the second reference information comprises at least one of:
time information for changing a QoS parameter;
location information for changing the QoS parameter;
information of a data flow corresponding to the QoS parameter;
information of an application corresponding to the data flow; and
a target application layer parameter or application layer behavior determined by the second network device.

79. The terminal device according to any one of claims 61 to 78, wherein the first network device is a core network device, or the first network device is an access network device.

80. The terminal device according to any one of claims 61 to 79, wherein the first message is a non-access stratum NAS message or a radio resource control RRC connection reconfiguration message.

81. A network device, comprising:
a communication unit, configured to send first condition information to a terminal device, wherein the first condition information is used by the terminal device to determine a condition for changing quality of service QoS related information.

82. The network device according to claim 81, wherein the first condition information is comprised in a first message, and the first message is used to determine a change of the quality of service QoS related information.

83. The network device according to claim 81, wherein the first condition message is configured to the terminal device by the network device before a first message, and wherein the first message is used to determine a change of the quality of service QoS related information.

84. The network device according to claim 82 or 83, wherein the first message comprises at least one of:
a quality of service QoS parameter of a data flow that need to be changed;
a QoS parameter of a bearer that need to be changed;
a binding relationship of the data flow that needs to be changed; and
a binding relationship of the bearer that needs to be changed.

85. The network device according to claim 84, wherein the first condition information includes at least one of:
time information for changing the QoS parameter;
location information for changing the QoS parameter;
time information for changing a binding relationship between the data flow and a filter;
location information for changing the binding relationship between the data flow and the filter;
time information for changing a binding relationship between a radio bearer and the data flow;
location information for changing the binding relationship between the radio bearer and the data flow;
time information for changing a configuration parameter of the radio bearer; and
location information for changing the configuration parameter of the radio bearer.

86. The network device according to claim 85, wherein the time information is used to indicate a specific time point or time period.

87. The network device according to claim 85, wherein the time information comprises first time information and a first time offset, and the first time offset is a time offset relative to the first time information.

88. The network device according to claim 87, wherein the first time information is used to indicate a sending time of the first message.

89. The network device according to claim 82 or 83, wherein the first message comprises at least one of:
a changed quality of service QoS parameter of a data flow;
a changed QoS parameter of a bearer;
a changed binding relationship of the data flow; and
a changed binding relationship of the bearer.

90. The network device according to claim89, wherein the first condition information comprises at least one of:
an effective time of the changed QoS parameter;
an effective location of the changed QoS parameter;
an effective time of a changed binding relationship between the data flow and a filter;
an effective location of the changed binding relationship between the data flow and the filter;
an effective time of a changed binding relationship between a radio bearer and the data flow;
an effective location of the changed binding relationship between the radio bearer and the data flow;
an effective time of a changed radio bearer configuration parameter; and
an effective location of the changed radio bearer configuration parameter.

91. The network device according to any one of claims 82 to 90, wherein the first message comprises:
information of the data flow or bearer corresponding to the QoS parameter that has been changed or needs to be changed, and/or information of the application corresponding to the data flow or bearer.

92. The network device according to any one of claims 82 to 91, wherein the first message is used to establish, modify or delete a connection in a mobile network.

93. The network device according to any one of claims 81 to 92, wherein the communication unit is further configured to:
send a second message to a second network device, wherein the second message is used to determine change information of the QoS related information;
wherein the second message comprises second condition information, and the second condition information is used for the second network device to determine a condition for changing the QoS related information.

94. The network device of claim 93, wherein the second message comprises at least one of:
a quality of service QoS parameter of a data flow that need to be changed;
a QoS parameter of a bearer that need to be changed;
a binding relationship of the data flow that needs to be changed; and
a binding relationship of the bearer that needs to be changed.

95. The network device according to claim 94, wherein the second condition information comprises at least one of:
time information for changing the QoS parameter;
location information for changing the QoS parameter;
time information for changing a binding relationship between the data flow and a filter; and
location information for changing the binding relationship between the data flow and the filter.

96. The network device according to claim 95, wherein the time information is used to indicate a specific time point or time period; or
the time information comprises second time information and a second time offset, wherein the second time offset is a time offset relative to the second time information.

97. The network device according to claim 96, wherein the second time information is used to indicate a sending time of the second message.

98. The network device of claim 93, wherein the second message comprises at least one of:
a changed quality of service QoS parameter of a data flow;
a changed QoS parameter of a bearer;
a changed binding relationship of the data flow; and
a changed binding relationship of the bearer.

99. The network device according to claim 98, wherein the second condition information comprises at least one of:
an effective time of the changed QoS parameter;
an effective location of the changed QoS parameter;
an effective time of a changed binding relationship between the data flow and a filter; and
an effective location of the changed binding relationship between the data flow and the filter.

100. The network device according to any one of claims 93 to 99, wherein the second network device comprises at least one of: an application server, an access network device, and a core network device.

101. A network device, comprising:
a communication unit, configured to receive second message sent by a first network device, wherein the second message is used to determine change information of quality of service QoS related information; and
a processing unit, configured to determine a condition for changing the QoS related information.

102. The network device of claim 101, wherein the second condition information is comprised in the second message.

103. The network device according to claim 101, wherein the second condition information is predefined, or the second condition information is preconfigured by the first network device.

104. The network device according to any one of claims 101 to 103, wherein the second message comprises at least one of:
a quality of service QoS parameter of a data flow that need to be changed;
a QoS parameter of a bearer that need to be changed;
a binding relationship of the data flow that needs to be changed; and
a binding relationship of the bearer that needs to be changed.

105. The network device according to claim 104, wherein the second condition information comprises at least one of:
time information for changing the QoS parameter;
location information for changing the QoS parameter;
time information for changing a binding relationship between the data flow and a filter; and
location information for changing the binding relationship between the data flow and the filter.

106. The network device according to claim 105, wherein the time information is used to indicate a specific time point or time period.

107. The network device according to claim 105, wherein the time information includes second time information and a second time offset, and the second time offset is a time offset relative to the second time information.

108. The network device according to claim 107, wherein the second time information is used to indicate a sending time of the second message.

109. The network device according to any one of claims 101 to 103, wherein the second message comprises at least one of:
a changed QoS parameter of a data flow;
a changed QoS parameter of a bearer;
a changed binding relationship of the data flow; and
a changed binding relationship of the bearer.

110. The network device according to claim 109, wherein the second condition information comprises at least one of:
an effective time of the changed QoS parameter;
an effective location of the changed QoS parameter;
an effective time of a changed binding relationship between the data flow and a filter; and
an effective location of the changed binding relationship between the data flow and the filter.

111. The network device according to any one of claims 101 to 110, wherein the second message comprises:
the data flow or bearer corresponding to the QoS parameter that needs to be changed or has been changed, and/or information about the application corresponding to the data flow or bearer.

112. The network device according to any one of claims 101 to 111, wherein the processing unit is further configured to:
adjust an application layer parameter or an application layer behavior of the network device according to the second condition information.

113. The network device according to claim 112, wherein the processing unit is further configured to:
determine a target application layer parameter of the network device according to the changed QOS parameter and a second corresponding relationship, wherein the second corresponding relationship is a corresponding relationship between a QoS parameter and an application layer parameter.

114. The network device according to claim 112 or 113, wherein the communication unit is further configured to:
send second reference information to a terminal device, wherein the second reference information is used by the terminal device to determine a target application layer parameter or application layer behavior of the terminal device.

115. The network device according to claim 114, wherein the second reference information comprises at least one of:
time information for changing a QoS parameter;
location information for changing the QoS parameter;
information of a data flow corresponding to the QoS parameter;
information of an application corresponding to the data flow; and
a target application layer parameter or application layer behavior determined by the network device.

116. The network device according to any one of claims 101 to 111, wherein the communication unit is further configured to:
receive first reference information sent by the terminal device; and
the processing unit is further configured to determine a target application layer parameter of the network device according to the first reference information.

117. The network device according to claim 116, wherein the first reference information comprises at least one of:
time information for changing a QoS parameter;
location information for changing the QoS parameter;
information of a data flow corresponding to the QoS parameter;
information of an application corresponding to the data flow;
a changed QoS parameter of the terminal device; and
a target application layer parameter or application layer behavior determined by the terminal device.

118. The network device according to any one of claims 101 to 117, wherein the network device comprises at least one of: an application server, an access network device, and a core network device.

119. The network device according to any one of claims 101 to 118, wherein the first network device is an access network device.

120. The network device according to any one of claims 101 to 118, wherein the first network device is a core network device.

121. A terminal device, comprising: a processor and a memory, the memory is used to store a computer program, and the processor is used to invoke and run the computer program stored in the memory, to execute the method according to any one of claims 1 to 20.

122. A chip, comprising: a processor, configured to invoke and run a computer program from a memory, to cause a device installed with the chip to execute the method according to any one of claims 1 to 20.

123. A computer-readable storage medium, being used for storing a computer program, the computer program causing a computer to execute the method according to any one of claims 1 to 20.

124. A computer program product, comprising computer program instructions, the computer program instructions causing a computer to execute the method according to any one of claims 1 to 20.

125. A computer program, causing a computer to execute the method according to any one of claims 1 to 20.

126. A network device, comprising: a processor and a memory, the memory is used to store a computer program, and the processor is used to invoke and run the computer program stored in the memory, to perform the method according to any one of claims 21 to 40.

127. A chip, comprising: a processor, configured to invoke and run a computer program from a memory, to cause a device installed with the chip to execute the method according to any one of claims 21 to 40.

128. A computer-readable storage medium, being used for storing a computer program, the computer program causing a computer to execute the method according to any one of claims 21 to 40.

129. A computer program product, comprising computer program instructions, the computer program instructions causing a computer to execute the method according to any one of claims 21 to 40.

130. A computer program, causing a computer to execute the method according to any one of claims 21 to 40.

131. A network device, comprising: a processor and a memory, the memory is used to store a computer program, and the processor is used to invoke and run the computer program stored in the memory, to perform the method according to any one of claims 41 to 60.

132. A chip, comprising: a processor, configured to invoke and run a computer program from a memory, to cause a device installed with the chip to execute the method according to any one of claims 41 to 60.

133. A computer-readable storage medium, being used for storing a computer program, the computer program causing a computer to execute the method according to any one of claims 41 to 60.

134. A computer program product, comprising computer program instructions, the computer program instructions causing a computer to execute the method according to any one of claims 41 to 60.

135. A computer program, causing a computer to execute the method according to any one of claims 41 to 60.
